(19) Europäisches Patentamt / European Patent Office / Office européen des brevets

(11) **EP 1 607 605 B1**

(12) **FASCICULE DE BREVET EUROPEEN**

(45) Date de publication et mention
de la délivrance du brevet:
**20.06.2007 Bulletin 2007/25**

(51) Int Cl.:
*F02D 41/00* (2006.01)     *F02D 35/02* (2006.01)
*G01F 1/86* (2006.01)

(21) Numéro de dépôt: **05300454.5**

(22) Date de dépôt: **03.06.2005**

(54) **Système d'estimation de la pression dans le collecteur d'échappement d'un moteur diesel et procédé de calibrage de ce système**

System zum Abschätzen des Drucks im Abgaskrümmer einer Dieselbrennkraftmaschine und Verfahren zur Systemkalibrierung

Pressure estimating system in the exhaust manifold of a diesel engine and method for calibrating said system

(84) Etats contractants désignés:
**AT BE BG CH CY CZ DE DK EE ES FI FR GB GR HU IE IS IT LI LT LU MC NL PL PT RO SE SI SK TR**

(30) Priorité: **11.06.2004 FR 0406361**

(43) Date de publication de la demande:
**21.12.2005 Bulletin 2005/51**

(73) Titulaire: **Peugeot Citroen Automobiles SA**
**78943 Vélizy-Villacoublay Cedex (FR)**

(72) Inventeur: **SOUCHON, Vincent**
**42, Bld des Batignolles**
**75017 PARIS (FR)**

(56) Documents cités:
**EP-A- 1 162 357         WO-A-20/04048761**

**Description**

La présente invention concerne un système d'estimation d'au moins une valeur de la pression des gaz dans un collecteur d'échappement d'un moteur Diesel de véhicule automobile et un procédé de calibrage de ce système.

Plus particulièrement, la présente invention concerne un système d'estimation du type sous-mentionné appliqué à un moteur Diesel comprenant des moyens formant rampe commune d'alimentation en carburant des cylindres de celui-ci, des moyens de mesure de la pression dans au moins un cylindre et des moyens d'acquisition de l'angle vilebrequin du au moins un cylindre.

La pression des gaz dans un collecteur d'échappement d'un moteur Diesel est un paramètre influençant le fonctionnement de celui-ci. Par exemple, dans le cas d'un moteur Diesel équipé d'un système de recirculation des gaz d'échappement, la recirculation des gaz d'échappement est en partie réalisée grâce à la différence de pression entre l'entrée d'admission du mélange air/gaz d'échappement dans le moteur et le collecteur des gaz d'échappement du moteur. Afin de réaliser un contrôle satisfaisant du débit et de la composition des gaz entrant dans le moteur, il est donc avantageux de connaître la pression des gaz dans le collecteur.

De même, pour les moteurs Diesel équipés d'un turbocompresseur, la puissance de ce dernier dépend directement de la pression maximale des gaz dans le collecteur d'échappement. Là encore il peut être avantageux d'exploiter la valeur de la pression maximale dans le collecteur d'échappement pour réaliser un contrôle satisfaisant du turbocompresseur.

On connaît dans l'état de la technique des moteurs Diesel équipés d'un capteur de pression agencé dans le collecteur d'échappement de celui-ci afin de mesurer la pression des gaz. Toutefois, l'utilisation d'un capteur spécifique pose certains problèmes, comme la nécessité d'une connectique électrique supplémentaire, d'un calibrage régulier de celui-ci ou d'une maintenance supplémentaire. Par ailleurs, d'une manière générale, ce type de capteur est onéreux.

Le but de la présente invention est de résoudre les problèmes susmentionnés en proposant un système d'estimation d'au moins une valeur de pression des gaz dans le collecteur d'échappement, notamment la pression maximale et la pression moyenne dans celui-ci, et n'utilisant donc pas de capteur de pression spécifique pour mesurer la pression des gaz dans le collecteur d'échappement du moteur.

A cet effet, la présente invention a pour objet un système d'estimation d'au moins une valeur de la pression des gaz dans un collecteur d'échappement d'un moteur Diesel de véhicule automobile, ce moteur comprenant des moyens formant rampe commune d'alimentation en carburant des cylindres de celui-ci, des moyens de mesure de la pression dans au moins un cylindre et des moyens d'acquisition de l'angle vilebrequin du au moins un cylindre, caractérisé en ce qu'il comprend :

- des moyens d'acquisition de la valeur de pression dans le au moins un cylindre du moteur pour au moins un angle vilebrequin d'acquisition prédéterminé ; et
- des moyens d'estimation de ladite au moins une valeur de pression dans le collecteur d'échappement en fonction de la valeur de pression acquise dans le au moins un cylindre pour le au moins un angle vilebrequin d'acquisition prédéterminé.

Selon d'autres caractéristiques, le système est caractérisé en ce que :

- le au moins un angle vilebrequin prédéterminé d'acquisition est compris dans un premier ensemble prédéterminé d'au moins un angle vilebrequin pour lequel la pression cylindre dans le au moins un cylindre est représentative de la pression moyenne dans le collecteur d'échappement, et en ce que :

  - les moyens d'acquisition sont adaptés pour acquérir la valeur de pression dans le au moins un cylindre pour un angle vilebrequin d'acquisition prédéterminé de ce premier ensemble ; et
  - les moyens d'estimation sont adaptés pour estimer la pression moyenne dans le collecteur d'échappement en fonction de la valeur de pression dans le au moins un cylindre pour cet angle vilebrequin d'acquisition prédéterminé.
  - le premier ensemble d'au moins un angle vilebrequin possède des valeurs comprises entre 50° vil et 180° vil, et de préférence entre 140° vil et 180° vil.
  - les moyens d'estimation sont adaptés pour estimer la pression moyenne dans le collecteur selon une relation prédéterminée en fonction de l'angle vilebrequin d'acquisition prédéterminé du premier ensemble ;
  - les moyens d'estimation sont adaptés pour estimer la pression moyenne dans le collecteur selon la relation :

$$\overline{P}_{coll} = A(\theta_1) \times \frac{\sum\limits_{i=1}^{M} P_{cyl}^{i}(\theta_1)}{M} + B(\theta_1)$$

où $\overline{P}_{coll}$ est la pression moyenne dans le collecteur, $\theta_1$ est l'angle vilebrequin d'acquisition prédéterminé du premier ensemble, $A(\theta_1)$ et $B(\theta_1)$ sont des paramètres prédéterminés en fonction de l'angle vilebrequin d'acquisition $\theta_1$ prédéterminé du premier ensemble, M est le nombre de cylindres pour lequel l'acquisition de valeur de pression est réalisée, et $P_{cyl}^{i}((\theta_1)$ est la valeur de pression acquise dans le $i^{ème}$ cylindre pour lequel l'acquisition de pression est réalisée ;

- le au moins un angle vilebrequin est compris dans un second ensemble prédéterminé d'au moins un angle vilebrequin pour lequel la pression cylindre dans le au moins un cylindre est représentative de la pression maximale dans le collecteur d'échappement, et en ce que :

    - les moyens d'acquisition sont adaptés pour acquérir la valeur de pression dans le au moins un cylindre pour un angle vilebrequin d'acquisition prédéterminé de ce second ensemble ; et
    - les moyens d'estimation sont adaptés pour déterminer la pression maximale dans le collecteur d'échappement en fonction de la valeur de pression cylindre dans le au moins un cylindre pour cet angle vilebrequin d'acquisition prédéterminé.

- le second ensemble d'au moins un angle vilebrequin possède des valeurs comprises entre 50° vil et 180° vil, et de préférence entre 140° vil et 180° vil ;
- les moyens d'estimation sont adaptés pour estimer la pression maximale dans le collecteur selon une relation prédéterminée en fonction de l'angle vilebrequin d'acquisition prédéterminé du second ensemble ;
- les moyens d'estimation sont adaptés pour estimer la pression maximale dans le collecteur selon la relation :

$$\hat{P}_{coll} = C(\theta_2) \times \frac{\sum\limits_{i=1}^{M} P_{cyl}^{i}(\theta_2)}{M} + D(\theta_2)$$

où $\hat{P}_{coll}$ est la pression maximale dans le collecteur, $\theta_2$ est l'angle vilebrequin d'acquisition prédéterminé du second ensemble, $C(\theta_2)$ et $D(\theta_2)$ sont des paramètres prédéterminés en fonction de l'angle vilebrequin d'acquisition prédéterminé $\theta_2$ du second ensemble, M est le nombre de cylindres pour lequel l'acquisition de valeur de pression cylindre est réalisée, et $P_{cyl}^{i}(\theta_2)$ est la valeur de pression cylindre dans le $i^{ème}$ cylindre pour lequel l'acquisition de pression est réalisée.
- il comprend en outre des moyens de sélection adaptés pour sélectionner le au moins un angle vilebrequin d'acquisition en fonction de la précision souhaitée sur la au moins une valeur estimée de pression dans le collecteur d'échappement.

L'invention a également pour objet un procédé de calibrage d'un système d'estimation du type susmentionné, les moyens d'estimation étant adaptés pour estimer la au moins une valeur de la pression dans le collecteur d'échappement selon une relation d'un type prédéterminé dépendant de paramètres, comprenant les étapes consistant à :

- réaliser une mesure, sur au moins un cycle moteur, de la au moins une valeur de la pression dans le collecteur d'échappement d'un moteur Diesel de véhicule automobile ;
- échantillonner un intervalle prédéterminé d'angles vilebrequin ;
- déterminer, pour chaque angle vilebrequin de l'intervalle d'angles vilebrequin échantillonné, les valeurs des paramètres de la fonction des moyens d'estimation qui correspondent à l'erreur minimale entre la mesure de la au moins une valeur de la pression dans le collecteur d'échappement et l'estimation correspondante déterminée au moyen de cette fonction ; et

- déterminer le au moins un angle vilebrequin du au moins un cylindre et les paramètres de la fonction des moyens d'estimation comme étant respectivement l'angle vilebrequin de l'intervalle d'angles vilebrequin échantillonné et les valeurs des paramètres de la fonction correspondants au minimum des erreurs minimales déterminées.

La présente invention sera mieux comprise à la lecture de la description qui va suivre, donnée uniquement à titre d'exemple, et faite en relation avec les dessins annexés dans lesquels :

- la figure 1 est une vue schématique d'un moteur Diesel de véhicule automobile équipé d'une unité de contrôle du fonctionnement de celui-ci comprenant le système d'estimation selon l'invention ;
- la figure 2 est une vue schématique du système d'estimation selon l'invention entrant dans la constitution de l'unité de contrôle du fonctionnement du moteur de la figure 1,
- la figure 3 est un ensemble de courbes illustrant la dépendance entre la pression moyenne dans le collecteur d'échappement et la pression dans un cylindre; et
- la figure 4 est un ensemble de courbes illustrant la dépendance entre la pression maximale dans le collecteur d'échappement et la pression dans un cylindre.

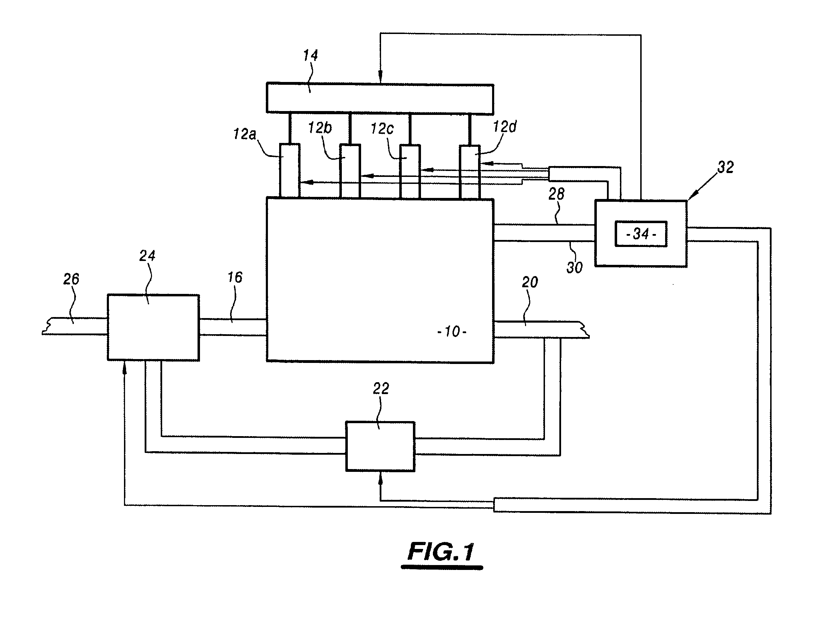

Sur la figure 1, on a illustré de façon schématique un moteur Diesel 10 de véhicule automobile.

Ce moteur comprend une pluralité de cylindres, par exemple 4 cylindres, qui sont alimentés respectivement en carburant par quatre injecteurs 12a, 12b, 12c, 12d, raccordés à des moyens 14 formant rampe commune d'alimentation en carburant de ceux-ci.

Le moteur 10 comprend également des moyens 16 d'admission de gaz, notamment pour alimenter en air les cylindres du moteur 10 pour la combustion du carburant. Les gaz brûlés issus de la combustion dans les cylindres sont collectés au niveau d'un collecteur de gaz d'échappement 20 et une partie des gaz d'échappement est prélevée au niveau de ce collecteur 20 par des moyens 22 de recirculation des gaz d'échappement (EGR), et injectés au niveau des moyens 16 d'admission des gaz.

Les moyens d'admission des gaz comprennent à cet effet des moyens de mélange 24, par exemple une vanne pilotée ou un raccord en T, adaptés pour mélanger l'air en provenance d'une entrée d'air 26 et la partie des gaz d'échappement prélevée au niveau du collecteur 20 et recyclé en entrée du moteur 10.

Le moteur 10 comprend par ailleurs des moyens 28 de mesure de la pression dans au moins un cylindre du moteur. De manière préférentielle les moyens 28 de mesure de la pression dans au moins un cylindre sont des moyens d'acquisition de la pression dans chaque cylindre du moteur, et sont par exemple constitués d'un capteur de pression agencé dans la bougie de préchauffage de chaque cylindre.

Le moteur 10 comprend également des moyens 30 d'acquisition de l'angle de l'arbre moteur, par exemple une roue dentée fixée sur l'arbre moteur et associée à un capteur à effet Hall, comme cela est connu en soi dans l'état de la technique. Les moyens 30 sont adaptés pour déterminer en fonction de l'angle de l'arbre moteur, l'angle vilebrequin des cylindres du moteur d'une manière connue dans l'état de la technique.

Le contrôle du fonctionnement du moteur est de manière classique mis en oeuvre par une unité 32 de contrôle de fonctionnement, ou unité ECU, qui reçoit entre autres les signaux de pression dans les cylindres à partir des moyens 28 de mesure et le signal d'angle vilebrequin à partir des moyens 30 d'acquisition, et réalise en fonction de ces signaux une régulation de paramètres d'injection du carburant dans les cylindres ou des quantités de gaz d'échappement recyclé par exemple.

Dans un mode de réalisation du système selon l'invention, l'unité 32 ECU comprend une sous-unité 34 mettant en oeuvre le système selon l'invention, comme cela est décrit plus en détail ci-dessous.

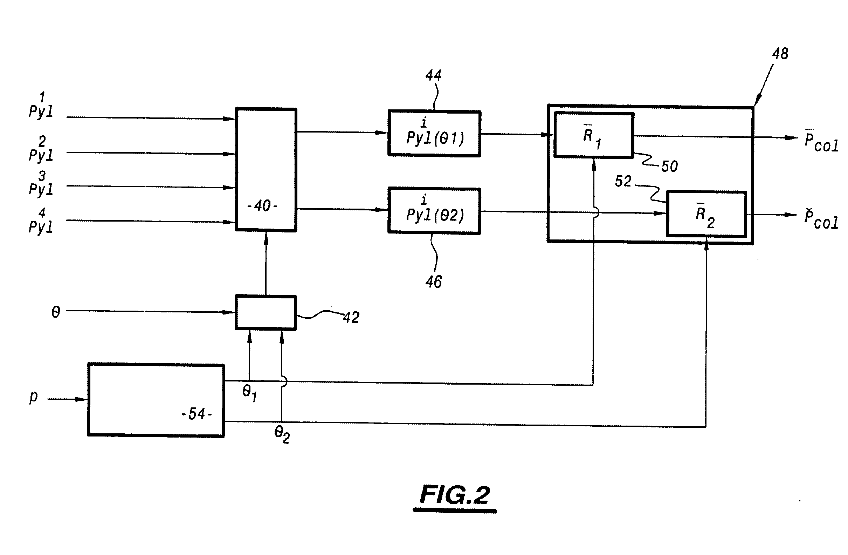

La figure 2 est une vue schématique du système de détermination d'au moins une valeur de pression des gaz d'échappement dans le collecteur d'échappement 20 mis en oeuvre par la sous-unité 34 de l'unité 32 ECU.

Ce système comprend des moyens 40 d'acquisition recevant en entrée les signaux $P_{cyl}^1$, $P_{cyl}^2$, $P_{cyl}^3$,

$P_{cyl}^4$ de pression dans les cylindres en provenance des moyens 28 de mesure de la pression dans les cylindres.

Ces moyens 40 d'acquisition sont adaptés pour acquérir la valeur de pression dans chaque cylindre du moteur pour au moins un angle vilebrequin prédéterminé d'acquisition du cylindre.

De manière préférentielle, les moyens 40 d'acquisition sont adaptés pour acquérir la pression dans chaque cylindre du moteur pour un premier angle vilebrequin $\theta_1$ d'acquisition prédéterminé pour lequel la pression dans le cylindre est représentative de la pression moyenne des gaz dans le collecteur d'échappement 20 et pour un second angle $\theta_2$ vilebrequin d'acquisition prédéterminé pour lequel la pression dans le cylindre est représentative de la pression maximale des gaz dans le collecteur d'échappement 20.

Il peut en effet être démontré qu'il existe une correspondance entre la pression dans un cylindre et la pression dans le collecteur d'échappement.

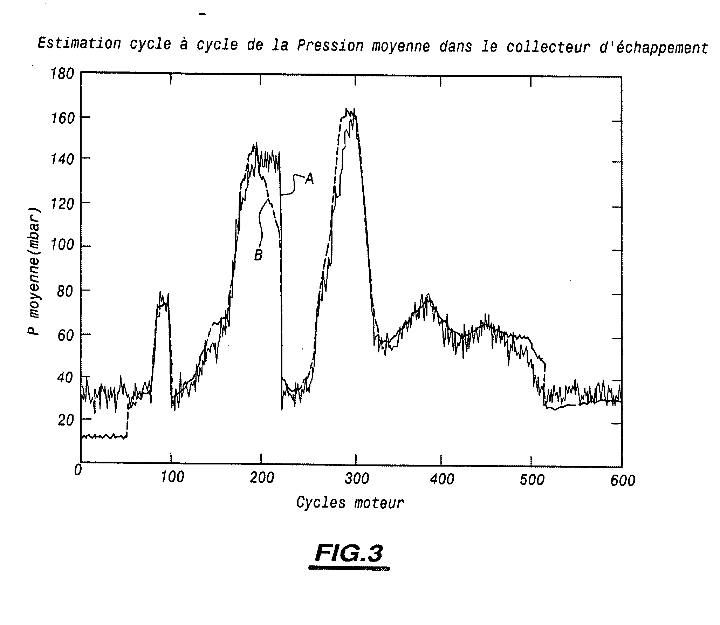

Pour des angles vilebrequin prédéterminés après le point mort haut combustion (PMH) du cycle d'un cylindre, il peut être montré que la pression dans ce cylindre est représentative de la pression moyenne dans le collecteur d'échappement, comme cela est illustré par la figure 3.

La figure 3 illustre en effet la dépendance affine qui existe entre la pression moyenne dans le collecteur d'échappement et la pression dans le cylindre.

Cette figure présente des résultats d'une étude antérieure réalisée sur un moteur Diesel associé à des moyens formant rampe d'alimentation commune en carburant des cylindres. La première courbe A de cette figure, en ligne continue, correspond à la pression moyenne mesurée dans le collecteur d'échappement de ce moteur en réponse à une consigne d'accélération prédéterminée sur plusieurs cycles successifs du moteur.

La seconde courbe B de cette figure, en ligne discontinue, correspond à la pression moyenne estimée dans le même collecteur. Cette pression moyenne estimée a été calculée en appliquant une relation affine prédéterminée aux mesures de la pression dans un cylindre d'un moteur Diesel objet de cette étude pour un angle vilebrequin égal à 180˚ vil après le PMH. Comme il est possible de le constater, l'erreur entre la pression moyenne mesurée et la pression moyenne estimée est faible, et cela même pour des variations importantes de la pression moyenne mesurée.

Ainsi, il est possible d'estimer instantanément de façon fiable la pression moyenne dans le collecteur à l'aide d'une unique relation affine pour un angle vilebrequin prédéterminé.

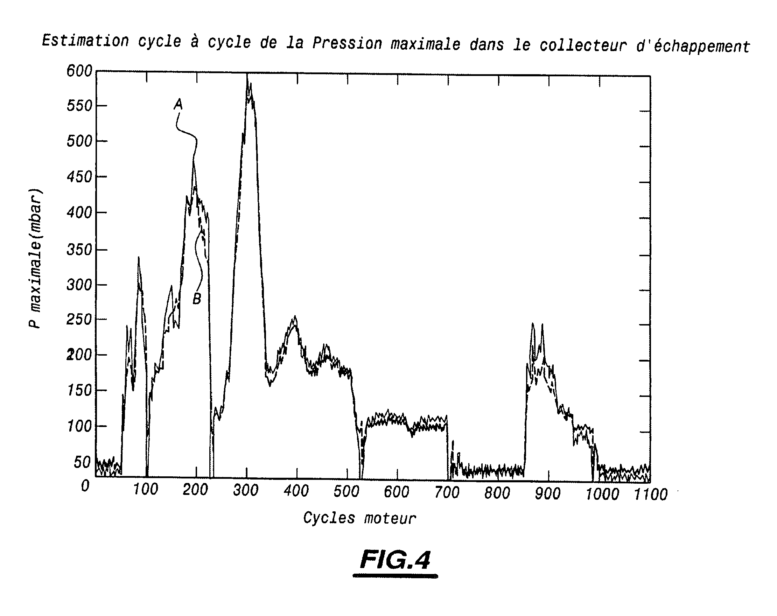

Pour des angles vilebrequin d'acquisition prédéterminés après le point mort haut combustion du cycle d'un cylindre, il peut être également montré que la pression dans un cylindre est représentative de la pression maximale dans le collecteur d'échappement, comme cela est illustré par la figure 4.

La figure 4 illustre en effet la dépendance affine entre la pression maximale dans le collecteur d'échappement et la pression dans le cylindre.

Cette figure présente également les résultats de l'étude antérieure réalisée sur le moteur Diesel susmentionné.

La première courbe A de cette figure, en ligne continue, correspond à la pression maximale mesurée dans le collecteur d'échappement en réponse à une consigne d'accélération prédéterminée pour des cycles successifs du moteur.

La seconde courbe B de cette figure, en ligne discontinue, correspond à la pression maximale estimée dans le collecteur d'échappement, obtenue par l'application d'une seconde relation affine prédéterminée aux mesures de la pression dans un cylindre du moteur pour un angle vilebrequin égal à 155˚ vil après le PMH.

Là encore, l'erreur entre la pression maximale mesurée et la pression maximale estimée est faible, et cela même pour des variations importantes de la pression maximale mesurée. Ceci illustre le fait qu'il est également possible d'estimer instantanément de façon fiable la pression maximale dans le collecteur d'échappement en fonction de la pression dans un cylindre du moteur en appliquant une relation affine prédéterminée pour un angle vilebrequin prédéterminé.

La détermination des relations affines susmentionnées, ainsi que la détermination des angles vilebrequin, utilisés pour ces estimations seront expliquées plus en détail par la suite.

En se référant à nouveau à la figure 2, le système d'estimation comprend en outre des moyens 42 de déclenchement de l'acquisition de la valeur de pression dans chaque cylindre pour le au moins un angle vilebrequin d'acquisition, c'est-à-dire les angles vilebrequin $\theta_1$ et $\theta_2$.

A cet effet, les moyens 42 de déclenchement reçoivent en entrée l'angle vilebrequin $\theta$ du cylindre des moyens d'acquisition de l'angle vilebrequin et les angles vilebrequin prédéterminés d'acquisition $\theta_1$ et $\theta_2$.

Lorsque l'angle vilebrequin $\theta$ du cylindre est sensiblement égal à l'angle vilebrequin d'acquisition $\theta_1$, les moyens 42 de déclenchement activent les moyens 40 d'acquisition qui acquièrent en réponse la valeur de pression dans le cylindre pour cet angle vilebrequin.

D'une manière analogue, les moyens 42 de déclenchement déclenchent l'acquisition de la pression dans le cylindre lorsque l'angle vilebrequin acquis $\theta$ est sensiblement égal à l'angle d'acquisition $\theta_2$.

Les valeurs de la pression dans les cylindres pour les angles vilebrequin d'acquisition $\theta_1$ et $\theta_2$ sont délivrés à deux mémoires tampons 44, 46 respectivement pour la mémorisation de ces valeurs à des fins d'utilisation ultérieure.

Le système d'estimation comprend également des moyens 48 d'estimation de la pression moyenne et maximale des gaz dans le collecteur d'échappement en fonction de la valeur de pression acquise dans le au moins un cylindre pour le au moins un angle vilebrequin.

A cet effet, les moyens 48 d'estimation comprennent des moyens 50 de calcul de la pression moyenne des gaz dans le collecteur d'échappement.

Une fois terminée l'acquisition des valeurs de la pression dans les cylindres pour l'angle vilebrequin d'acquisition $\theta_1$, les moyens 50 de calcul reçoivent en entrée ces valeurs de pression de la première mémoire tampon 44, et estiment la pression moyenne des gaz dans le collecteur d'échappement selon la relation :

$$\overline{P}_{coll} = A(\theta_1) \times \frac{\sum_{i=1}^{M} P^i_{cyl}(\theta_1)}{M} + B(\theta_1) \qquad (1)$$

où $\overline{P}_{coll}$ est la pression moyenne dans le collecteur, $A(\theta_1)$ et $B(\theta_1)$ sont des paramètres prédéterminés en fonction de l'angle vilebrequin d'acquisition $\theta_1$, M est le nombre de cylindres pour lequel l'acquisition de valeur de pression est réalisée, c'est-à-dire le nombre de cylindres du moteur dans le mode de réalisation préféré du système selon l'invention,

et $P^i_{cyl}(\theta_1)$ est la valeur de pression acquise dans le i$^{ème}$ cylindre pour lequel l'acquisition de pression est réalisée.

Les moyens 48 d'estimation comprennent également des moyens 52 de calcul de la pression maximale des gaz dans le collecteur d'échappement.

Une fois terminée l'acquisition des valeurs de pression dans les cylindres pour l'angle vilebrequin d'acquisition $\theta_2$, les moyens 52 de calcul reçoivent en entrée ces valeurs de la pression de la seconde mémoire tampon 46, et estiment la pression maximale des gaz dans le collecteur d'échappement selon la relation :

$$\hat{P}_{coll} = C(\theta_2) \times \frac{\sum_{i=1}^{M} P^i_{cyl}(\theta_2)}{M} + D(\theta_2) \qquad (2)$$

où $\hat{P}_{coll}$ est la pression maximale dans le collecteur, $C(\theta_2)$ et $D(\theta_2)$ sont des paramètres prédéterminés en fonction de l'angle vilebrequin d'acquisition prédéterminé $\theta_2$, M est le nombre de cylindres pour lequel l'acquisition de valeur de pression cylindre est réalisée, c'est-à-dire le nombre de cylindres du moteur dans le mode de réalisation préféré du système selon l'invention, et $P^i_{cyl}(\theta_2)$ est la valeur de pression cylindre dans le i$^{ème}$ cylindre pour lequel l'acquisition de pression est réalisée.

Le premier angle $\theta_1$ est sélectionné dans un premier ensemble prédéterminé d'au moins un angle vilebrequin pour lequel la pression dans un cylindre est représentative de la pression moyenne dans le collecteur d'échappement, par exemple entre 50˚ vil et 180˚ vil, et de préférence entre 140˚ vil et 180˚ vil. De manière analogue, l'angle $\theta_2$ d'acquisition est sélectionné dans un second ensemble prédéterminé d'au moins un angle vilebrequin pour lequel la pression dans un cylindre est représentative de la pression maximale dans le collecteur d'échappement, par exemple entre 50˚ vil et 180˚ vil, et de préférence entre 140˚ vil et 180˚ vil.

La détermination de l'angle vilebrequin $\theta_1$ et des coefficients A et B de la relation (1) utilisés pour l'estimation de la pression moyenne dans le collecteur d'échappement peut être réalisée de manière rapide et automatique.

Cette détermination consiste par exemple tout d'abord à réaliser une mesure de la pression moyenne dans le collecteur d'échappement d'un moteur Diesel de test sur N cycles moteur, où N est un nombre prédéterminé.

Puis, cette détermination consiste à réaliser un échantillonnage de l'intervalle d'angles vilebrequin [50˚ vil, 180˚ vil] après le PMH, et, pour chaque angle vilebrequin de cet intervalle échantillonné, déterminer les valeurs des coefficients A et B de la relation (1) qui minimisent l'erreur e, par exemple quadratique moyenne, entre la mesure de la pression moyenne sur les N cycles moteur et la pression moyenne estimée correspondante pour ces N cycles moteur déterminée au moyen de la relation (1) utilisant les coefficients A et B, c'est-à-dire déterminer les valeurs A et B solutions du problème de minimisation suivant :

$$\min_{A,B\in R^2} e = \sum_{j=1}^{N}\left( \overline{P}_{mes}(j) - A\times\frac{\sum_{i=1}^{M}P_{cyl}^i(\theta,j)}{M} + B \right)^2$$

où $\overline{P}_{mes}$(j) est la mesure de la pression moyenne dans le collecteur d'échappement pour le j<sup>ème</sup> cycle moteur, θ est l'angle vilebrequin de l'intervalle échantillonné, et $P_{cyl}^i$(θ,j) est la pression dans le i<sup>ème</sup> cylindre pour l'angle vilebrequin θ et pour le j<sup>ème</sup> cycle moteur.

Les valeurs de l'angle vilebrequin $\theta_1$ et des coefficients A et B de la relation (1) finalement retenues sont celles correspondant au minimum des erreurs minimales calculées pour les angles vilebrequin de l'intervalle échantillonné, c'est-à-dire celle fournissant la meilleure précision pour l'estimation.

Le nombre N de cycle moteur utilisé pour la détermination des valeurs de l'angle vilebrequin $\theta_1$ et des coefficients A et B de la relation (1) peut être égal à 1, car il a été observé que la précision de l'estimation de la pression moyenne obtenue au moyen de telles valeurs est satisfaisante.

D'une manière analogue, il est possible de déterminer l'angle vilebrequin $\theta_2$ et les coefficients C et D de la relation (2) utilisés pour l'estimation de la pression maximale dans le collecteur d'échappement de manière fiable et automatique en mettant en oeuvre le procédé de détermination susmentionné.

De manière avantageuse, la détermination des angles vilebrequin $\theta_1$ et $\theta_2$ et des coefficients A, B, C et D est réalisée pour l'intervalle [140˚ vil, 180˚ vil] après le PMH. Cet intervalle correspond en effet au début de la phase d'échappement du cycle d'un cylindre et permet une prise en compte rapide des variations de la pression dans le collecteur d'échappement.

Il est possible de déterminer plusieurs jeux de valeurs d'angles vilebrequin et de coefficients pour chacune des relations affines (1) et (2). Le choix final d'un ensemble de ces valeurs est alors réalisé en fonction, par exemple, de contraintes de conceptions et/ou de contraintes technologiques portant par exemple sur le choix des moyens 28 de mesure de la pression dans les cylindres.

La sélection des angles $\theta_1$ et $\theta_2$ d'acquisition peut également être réalisée en fonction de la précision souhaitée sur la valeur de la pression dans le collecteur d'échappement.

Pour la sélection des angles vilebrequin d'acquisition, le système d'estimation comprend en outre des moyens 54 de sélection adaptés pour sélectionner la valeur de l'angle $\theta_1$ et la valeur de l'angle $\theta_2$ en fonction de la précision souhaitée pour la pression moyenne et la pression maximale dans le collecteur d'échappement, mémorisée par exemple comme un paramètre par défaut dans l'unité ECU.

Pour tenir compte de la dépendance de paramètres A, B, C et D aux valeurs des angles vilebrequin, les moyens de calcul 50 et 52 reçoivent en outre comme entrée les valeurs des angles vilebrequin $\theta_1$ et $\theta_2$ respectivement et sont adaptés pour sélectionner les valeur des paramètres A, B, C et D en fonction de ceux-ci.

Ainsi, la pression maximale $\hat{P}_{coll}$ et/ou la pression moyenne $\overline{P}_{coll}$ dans le collecteur d'échappement peuvent être estimées sur une partie du cycle moteur ou sur un cycle moteur complet.

Bien entendu d'autres modes de réalisation sont possibles. On comprendra par exemple qu'il est possible de n'estimer que la pression moyenne dans le collecteur d'échappement ou uniquement la pression maximale en fonction des besoins du contrôle du fonctionnement du moteur.

De même il est possible d'acquérir plusieurs fois la pression dans les cylindres pour l'angle d'acquisition $\theta_1$ et/ou $\theta_2$, par exemple pour N cycles moteur. En utilisant une telle pluralité d'acquisitions, il est alors possible d'effectuer un moyennage des valeurs $\overline{P}_{coll}$ et/ou $\hat{P}_{coll}$ calculées selon les relations précédentes afin par exemple d'effectuer un filtrage du bruit et augmenter la robustesse de l'estimation de la pression dans le collecteur.

De plus, le système selon l'invention peut également être mis en oeuvre dans un circuit câblé spécialement prévu à cet effet ou une unité de traitement d'informations différente de l'unité ECU.

**Revendications**

1. Système d'estimation d'au moins une valeur de la pression des gaz dans un collecteur d'échappement d'un moteur (10) Diesel de véhicule automobile, ce moteur comprenant des moyens (14) formant rampe commune d'alimentation en carburant des cylindres de celui-ci, des moyens (28) de mesure de la pression dans au moins un cylindre et des moyens (30) d'acquisition de l'angle vilebrequin du au moins un cylindre, **caractérisé en ce qu**'il comprend :

   - des moyens (40) d'acquisition de la valeur de pression dans le au moins un cylindre du moteur pour au moins un angle vilebrequin d'acquisition prédéterminé ; et
   - des moyens (48) d'estimation de ladite au moins une valeur de pression dans le collecteur d'échappement en fonction de la valeur de pression acquise dans le au moins un cylindre pour le au moins un angle vilebrequin d'acquisition prédéterminé.

2. Système selon la revendication 1, **caractérisé en ce que** le au moins un angle vilebrequin prédéterminé d'acquisition est compris dans un premier ensemble prédéterminé d'au moins un angle vilebrequin pour lequel la pression cylindre dans le au moins un cylindre est représentative de la pression moyenne dans le collecteur d'échappement, et **en ce que** :

   - les moyens (42) d'acquisition sont adaptés pour acquérir la valeur de pression dans le au moins un cylindre pour un angle vilebrequin d'acquisition prédéterminé de ce premier ensemble ; et
   - les moyens (48) d'estimation sont adaptés pour estimer la pression moyenne dans le collecteur d'échappement en fonction de la valeur de pression dans le au moins un cylindre pour cet angle vilebrequin d'acquisition prédéterminé.

3. Système selon la revendication 2, **caractérisé en ce que** le premier ensemble d'au moins un angle vilebrequin possède des valeurs comprises entre 50˚ vil et 180˚ vil, et de préférence entre 140˚ vil et 180˚ vil.

4. Système selon la revendication 2 ou 3, **caractérisé en ce que** les moyens (48) d'estimation sont adaptés pour estimer la pression moyenne dans le collecteur selon une relation prédéterminée en fonction de l'angle vilebrequin d'acquisition prédéterminé du premier ensemble.

5. Système selon la revendication 4, **caractérisé en ce que** les moyens (48) d'estimation sont adaptés pour estimer la pression moyenne dans le collecteur selon la relation :

$$\overline{P}_{coll} = A(\theta_1) \times \frac{\sum_{i=1}^{M} P_{cyl}^i(\theta_1)}{M} + B(\theta_1)$$

où $\overline{P}_{coll}$ est la pression moyenne dans le collecteur, $\theta_1$ est l'angle vilebrequin d'acquisition prédéterminé du premier ensemble, $A(\theta_1)$ et $B(\theta_1)$ sont des paramètres prédéterminés en fonction de l'angle vilebrequin d'acquisition $\theta_1$ prédéterminé du premier ensemble, M est le nombre de cylindres pour lequel l'acquisition de valeur de pression est réalisée, et $P_{cyl}^i(\theta_1)$ est la valeur de pression acquise dans le i<sup>ème</sup> cylindre pour lequel l'acquisition de pression est réalisée.

6. Système selon l'une quelconque des revendications précédentes, **caractérisé en ce que** le au moins un angle vilebrequin est compris dans un second ensemble prédéterminé d'au moins un angle vilebrequin pour lequel la pression cylindre dans le au moins un cylindre est représentative de la pression maximale dans le collecteur d'échappement, et **en ce que** :

   - les moyens (42) d'acquisition sont adaptés pour acquérir la valeur de pression dans le au moins un cylindre pour un angle vilebrequin d'acquisition prédéterminé de ce second ensemble ; et
   - les moyens (48) d'estimation sont adaptés pour déterminer la pression maximale dans le collecteur d'échappement en fonction de la valeur de pression cylindre dans le au moins un cylindre pour cet angle vilebrequin d'acquisition prédéterminé.

7. Système selon la revendication 6, **caractérisé en ce que** le second ensemble d'au moins un angle vilebrequin possède des valeurs comprises entre 50˚ vil et 180˚ vil, et de préférence entre 140˚ vil et 180˚ vil.

8. Système selon la revendication 6 ou 7, **caractérisé en ce que** les moyens (48) d'estimation sont adaptés pour estimer la pression maximale dans le collecteur selon une relation prédéterminée en fonction de l'angle vilebrequin d'acquisition prédéterminé du second ensemble.

9. Système selon la revendication 8, **caractérisé en ce que** les moyens (48) d'estimation sont adaptés pour estimer la pression maximale dans le collecteur selon la relation :

$$\hat{P}_{coll} = C(\theta_2) \times \frac{\sum_{i=1}^{M} P_{cyl}^{i}(\theta_2)}{M} + D(\theta_2)$$

où $\hat{P}_{coll}$ est la pression maximale dans le collecteur, $\theta_2$ est l'angle vilebrequin d'acquisition prédéterminé du second ensemble, $C(\theta_2)$ et $D(\theta_2)$ sont des paramètres prédéterminés en fonction de l'angle vilebrequin d'acquisition prédéterminé $\theta_2$ du second ensemble, M est le nombre de cylindres pour lequel l'acquisition de valeur de pression cylindre est réalisée, et $P_{cyl}^{i}(\theta_2)$ est la valeur de pression cylindre dans le $i^{ème}$ cylindre pour lequel l'acquisition de pression est réalisée.

10. Système selon l'une quelconque des revendications précédentes, **caractérisé en ce qu'**il comprend en outre des moyens (54) de sélection adaptés pour sélectionner le au moins un angle vilebrequin d'acquisition en fonction de la précision souhaitée sur la au moins une valeur estimée de pression dans le collecteur d'échappement.

11. Procédé de calibrage d'un système d'estimation conforme à l'une quelconque des revendications 1 à 10, les moyens d'estimation étant adaptés pour estimer la au moins une valeur de la pression dans le collecteur d'échappement selon une relation d'un type prédéterminé dépendant de paramètres, **caractérisé en ce qu'**il comprend les étapes consistant à :

- réaliser une mesure, sur au moins un cycle moteur, de la au moins une valeur de la pression dans le collecteur d'échappement d'un moteur Diesel de véhicule automobile ;
- échantillonner un intervalle prédéterminé d'angles vilebrequin ;
- déterminer, pour chaque angle vilebrequin de l'intervalle d'angles vilebrequin échantillonné, les valeurs des paramètres de la fonction des moyens d'estimation qui correspondent à l'erreur minimale entre la mesure de la au moins une valeur de la pression dans le collecteur d'échappement et l'estimation correspondante déterminée au moyen de cette fonction ; et
- déterminer le au moins un angle vilebrequin du au moins un cylindre et les paramètres de la fonction des moyens d'estimation comme étant respectivement l'angle vilebrequin de l'intervalle d'angles vilebrequin échantillonné et les valeurs des paramètres de la fonction correspondant au minimum des erreurs minimales déterminées.

**Claims**

1. System for estimating at least one value for the pressure of the gases in an exhaust manifold of a motor vehicle diesel engine (10), this engine comprising means (14) forming a common rail for supplying fuel to the cylinders of said engine, means (28) for measuring the pressure in at least one cylinder and means (30) for detecting the crankshaft angle of the at least one cylinder, **characterised in that** it comprises:

- means (40) for detecting the value for pressure in the at least one cylinder of the engine for at least one predetermined detected crankshaft angle; and

- means (48) for estimating said at least one value of pressure in the exhaust manifold as a function of the detected value of pressure in the at least one cylinder for the at least one predetermined detected crankshaft angle.

2. System according to Claim 1, **characterised in that** the at least one predetermined detected crankshaft angle is comprised, in a first predetermined assembly, of at least one crankshaft angle for which the cylinder pressure in the at least one cylinder is representative of the mean pressure in the exhaust manifold, and **in that**:

- the detection means (42) are adapted to detect the value of pressure in the at least one cylinder for a predetermined detected crankshaft angle of this first assembly; and
- the estimating means (48) are adapted to estimate the mean pressure in the exhaust manifold as a function of the value of pressure in the at least one cylinder for this predetermined detected crankshaft angle.

3. System according to Claim 2, **characterised in that** the first assembly of at least one crankshaft angle preferably has values comprised between 50 CAD (crankshaft angle degrees) and 180 CAD, and between 140 CAD and 180 CAD.

4. System according to Claim 2 or 3, **characterised in that** the estimating means (48) are adapted to estimate the mean pressure in the manifold according to a predetermined relation as a function of the predetermined detected crankshaft angle of the first assembly.

5. System according to Claim 4, **characterised in that** the estimating means (48) are adapted to estimate the mean pressure in the manifold according to the relation:

$$\overline{P}_{mani} = A(\theta_1) \times \frac{\sum_{i=1}^{M} P_{cyl}^{i}(\theta_1)}{M} + B(\theta_1)$$

where $\overline{P}_{mani}$ is the mean pressure in the manifold, $\theta_1$ is the predetermined detected crankshaft angle of the first assembly, $A(\theta_1)$ and $B(\theta_1)$ are parameters predetermined as a function of the predetermined detected crankshaft angle 1 of the first assembly, M is the number of cylinders for which the pressure value is detected, and $P_{cyl}^{i}(\theta_1)$ is the pressure value detected in the i$^{th}$ cylinder for which pressure is detected.

6. System according to any one of the preceding claims, **characterised in that** the at least one crankshaft angle is comprised, in a second predetermined assembly, of at least one crankshaft angle for which the cylinder pressure in the at least one cylinder is representative of the maximum pressure in the exhaust manifold, and **in that**:

- the detection means (42) are adapted to detect the value of pressure in the at least one cylinder for a predetermined detected crankshaft angle of this second assembly; and
- the estimating means (48) are adapted to determine the maximum pressure in the exhaust manifold as a function of the cylinder pressure value in the at least one cylinder for this predetermined detected crankshaft angle.

7. System according to Claim 6, **characterised in that** the second assembly of at least one crankshaft angle has values comprised between 50 CAD and 180 CAD, and preferably between 140 CAD and 180 CAD.

8. System according to Claim 6 or 7, **characterised in that** the estimating means (48) are adapted to estimate the maximum pressure in the manifold according to a relation predetermined as a function of the predetermined detected crankshaft angle of the second assembly.

9. System according to Claim 8, **characterised in that** the estimating means (48) are adapted to estimate the maximum pressure in the manifold according to the relation:

$$\hat{P}_{mani} = C(\theta_2) \times \frac{\sum_{i=1}^{M} P_{cyl}^{i}(\theta_2)}{M} + D(\theta_2)$$

where $\hat{P}_{mani}$ is the maximum pressure in the manifold, $\theta_2$ is the predetermined detected crankshaft angle of the second assembly, $C(\theta_2)$ and $D(\theta_2)$ are parameters predetermined as a function of the predetermined detected crankshaft angle $\theta_2$ of the second assembly, M is the number of cylinders for which the value of cylinder pressure is detected, and $P_{cyl}^{i}(\theta_2)$ is the value of cylinder pressure in the $i^{th}$ cylinder for which the pressure is detected.

10. System according to any one of the preceding claims, **characterised in that** it also comprises selection means (54) adapted to select the at least one detected crankshaft angle as a function of the desired accuracy on the at least one estimated value of pressure in the exhaust manifold.

11. Method for calibrating an estimating system in accordance with any one of Claims 1 to 10, the estimating means being adapted to estimate the at least one value of the pressure in the exhaust manifold according to a relation of a predetermined type dependent on parameters, **characterised in that** it comprises the steps consisting in:

- taking a measurement, on at least one engine cycle, of the at least one value of the pressure in the exhaust manifold of a motor vehicle diesel engine;
- sampling a predetermined range of crankshaft angles;
- determining, for each crankshaft angle in the sampled range of crankshaft angles, the values of the parameters of the function of the estimating means that correspond to the minimal error between the measurement of the at least one value of the pressure in the exhaust manifold and the corresponding estimate determined by means of this function; and
- determining the at least one crankshaft angle of the at least one cylinder and the parameters of the function of the estimating means as being respectively the crankshaft angle in the sampled range of crankshaft angles and the values of the parameters of the function corresponding to the minimum of the minimal errors determined.

**Patentansprüche**

1. System zum Schätzen mindestens eines Wertes für den Druck der Gase in einem Abgaskrümmer eines Dieselmotors (10) eines Kraftfahrzeugs, wobei der Motor ein Common-Rail-System (14), Mittel (28) zum Messen des Drucks in mindestens einem Zylinder und Mittel (30) zur Erfassung des Kurbelwinkels des mindestens einen Zylinders umfasst, **dadurch gekennzeichnet, dass** es Folgendes aufweist:

- Mittel (40) zum Erfassen des Wertes des Drucks in dem mindestens einen Zylinder des Motors für mindestens einen vorher festgelegten Erfassungs-Kurbelwinkel und
- Mittel (48) zum Schätzen des mindestens einen Wertes des Drucks im Abgaskrümmer abhängig vom Wert des in dem mindestens einen Zylinder für den mindestens einen vorher festgelegten Erfassungs-Kurbelwinkel erfassten Drucks.

2. System nach Anspruch 1, **dadurch gekennzeichnet, dass** der mindestens eine vorher festgelegte Erfassungs-Kurbelwinkel in einer ersten vorher festgelegten Einheit aus mindestens einem Kurbelwinkel enthalten ist, bei dem der Zylinderdruck in dem mindestens einen Zylinder für den mittleren Druck im Abgaskrümmer repräsentativ ist, und **dadurch**, dass:

- die Erfassungsmittel (42) den Wert des Drucks in dem mindestens einen Zylinder bei einem vorher festgelegten Erfassungs-Kurbelwinkel der ersten Einheit erfassen können und dass
- die Schätzmittel (48) den mittleren Druck im Abgaskrümmer abhängig vom Wert des Drucks in dem mindestens einen Zylinder für den vorher festgelegten Erfassungs-Kurbelwinkel schätzen können.

**3.** System nach Anspruch 2, **dadurch gekennzeichnet, dass** die erste Einheit aus mindestens einem Kurbelwinkel Werte zwischen 50˚ und 180˚ und vorzugsweise zwischen 140˚ und 180˚ umfasst.

**4.** System nach Anspruch 2 oder 3, **dadurch gekennzeichnet, dass** die Schätzmittel (48) den mittleren Druck im Krümmer nach einer vorher festgelegten Relation abhängig vom vorher festgelegten Erfassungs-Kurbelwinkel der ersten Einheit schätzen können.

**5.** System nach Anspruch 4, **dadurch gekennzeichnet, dass** die Schätzmittel (48) den mittleren Druck im Krümmer nach der folgenden Relation schätzen können:

$$\overline{P}_{coll} = A(\theta_1)x\frac{\sum\limits_{i=1}^{M}P_{cyl}^i(\theta_1)}{M} + B(\theta_1)\,,$$

wobei $\overline{P}_{coll}$ der mittlere Druck im Krümmer, $\theta_1$ der vorher festgelegte Erfassungs-Kurbelwinkel der ersten Einheit, $A(\theta_1)$ und $B(\theta_1)$ abhängig vom vorher festgelegten Erfassungs-Kurbelwinkel $\theta_1$ der ersten Einheit vorher festgelegte Parameter, M die Anzahl der Zylinder, für die der Wert des Drucks erfasst wird, und $P_{cyl}^i(\theta_1)$ der erfasste Wert des Drucks im i-ten Zylinder sind, für den der Druck erfasst wird.

**6.** System nach einem der vorhergehenden Ansprüche, **dadurch gekennzeichnet, dass** der mindestens eine Kurbelwinkel in einer zweiten vorher festgelegten Einheit aus mindestens einem Kurbelwinkel enthalten ist, bei dem der Zylinderdruck in dem mindestens einen Zylinder für den maximalen Druck im Abgaskrümmer repräsentativ ist, und **dadurch**, dass

- die Erfassungsmittel (42) den Wert des Drucks in dem mindestens einen Zylinder für einen vorher festgelegten Erfassungs-Kurbelwinkel der zweiten Einheit erfassen können und dass
- die Schätzmittel (48) den maximalen Druck im Abgaskrümmer abhängig vom Wert des Zylinderdrucks in dem mindestens einen Zylinder für den vorher festgelegten Erfassungs-Kurbelwinkel bestimmen können.

**7.** System nach Anspruch 6, **dadurch gekennzeichnet, dass** die zweite Einheit aus mindestens einem Kurbelwinkel Werte zwischen 50˚ und 180˚ und vorzugsweise zwischen 140˚ und 180˚ umfasst.

**8.** System nach Anspruch 6 oder 7, **dadurch gekennzeichnet, dass** die Schätzmittel den maximalen Druck im Krümmer nach einer vorher festgelegten Relation abhängig vom vorher festgelegten Erfassungs-Kurbelwinkel der zweiten Einheit schätzen können.

**9.** System nach Anspruch 8, **dadurch gekennzeichnet, dass** die Schätzmittel (48) den maximalen Druck im Krümmer nach der folgenden Relation schätzen können:

$$\hat{P}_{coll} = C(\theta_2)x\frac{\sum\limits_{i=1}^{M}P_{cyl}^i(\theta_2)}{M} + D(\theta_2)\,,$$

wobei $\hat{P}_{coll}$ der maximale Druck im Krümmer, $\theta_2$ der vorher festgelegte Erfassungs-Kurbelwinkel der zweiten Einheit, $C(\theta_2)$ und $D(\theta_2)$ abhängig vom vorher festgelegten Erfassungs-Kurbelwinkel $\theta_2$ der zweiten Einheit vorher festgelegte Parameter, M die Anzahl an Zylindern, für die der Zylinderdruck-Wert erfasst wird, und $P_{cyl}^i(\theta_2)$ der Wert des Zylinderdrucks im i-ten Zylinder sind, dessen Druck erfasst wird.

**10.** System nach einem der vorhergehenden Ansprüche, **dadurch gekennzeichnet, dass** es darüber hinaus Auswahlmittel (54) umfasst, die den mindestens einen Erfassungs-Kurbelwinkel abhängig von der gewünschten Genauigkeit des mindestens einen geschätzten Wertes des Drucks im Abgaskrümmer auswählen können.

**11.** Verfahren zum Kalibrieren eines Schätzsystems nach einem der Ansprüche 1 bis 10, wobei die Schätzmittel den mindestens einen Wert für den Druck im Abgaskrümmer nach einer vorher festgelegten, von Parametern abhängigen Relation schätzen können, **dadurch gekennzeichnet, dass** es die folgenden Schritte aufweist:

- Messen des mindestens einen Wertes des Drucks im Abgaskrümmer eines Dieselmotors eines Kraftfahrzeugs über mindestens einen Motorzyklus,
- Abtasten eines vorher festgelegten Intervalls von Kurbelwinkeln,
- für jeden Kurbelwinkel des abgetasteten Kurbelwinkel-Intervalls Bestimmen der Werte der Parameter der Funktion der Schätzmittel, die dem kleinsten Fehler zwischen der Messung des mindestens einen Wertes des Drucks im Abgaskrümmer und der mithilfe dieser Funktion bestimmten entsprechenden Schätzung entsprechen, und
- Bestimmen des mindestens einen Kurbelwinkels des mindestens einen Zylinders und der Parameter der Funktion der Schätzmittel als den Kurbelwinkel des abgetasteten Kurbelwinkel-Intervalls beziehungsweise als die Werte der Parameter der Funktion, die dem Minimum der bestimmten kleinsten Fehler entsprechen.

*FIG.1*

_FIG.2_

Estimation cycle à cycle de la Pression moyenne dans le collecteur d'échappement

FIG.3

EP 1 607 605 B1

Estimation cycle à cycle de la Pression maximale dans le collecteur d'échappement

FIG.4

EP 1 607 605 B1